# FASCICULE DE BREVET EUROPEEN

(11) **EP 3 578 950 B1**
(45) Date de publication et mention de la délivrance du brevet: **09.08.2023**
(21) Numéro de dépôt: 18202412.5
(22) Date de dépôt: 24.10.2018
(51) Int. Cl.: G01N 1/22, G01N 1/24, G01N 1/02

(54) **APPAREIL PORTATIF DE PRÉLÈVEMENT D'AIR, AINSI QU'INSTALLATION DE PRÉLÈVEMENT D'AIR COMPORTANT UN TEL APPAREIL**
TRAGBARES GERÄT ZUR LUFTENTNAHME, SOWIE ANLAGE ZUR LUFTENTNAHME, DIE EIN SOLCHES GERÄT UMFASST
PORTABLE APPARATUS FOR BLEEDING AIR, AND AIR BLEED SYSTEM COMPRISING SUCH APPARATUS

(30) Priorité: 04.06.2018 FR 1854816
(43) Date de publication de la demande: 11.12.2019
(60) Demande divisionnaire: 23183697.4
(73) Titulaire: CYNO-DEV, 88800 Vittel (FR)
(72) Inventeur: RUCCELLA, Joseph, 88800 VITTEL (FR); DAHAN, Michael, 93220 GAGNY (FR)
(74) Mandataire: Lavoix

(56) Documents cités:
- CN-U- 205 182 472
- CN-U- 205 182 472
- GB-A- 703 079
- GB-A- 703 079
- US-A- 2 947 166
- US-A- 2 947 166
- US-A- 6 029 506
- US-A- 6 029 506
- US-A1- 2008 087 110
- US-A1- 2008 087 110

## Description

La présente invention concerne un système de détection de la présence d'une matière cible. Elle concerne également une installation de prélèvement d'air, comportant un tel système.

L'invention s'intéresse à la problématique du contrôle de marchandises et/ou de personnes, notamment lors d'actions d'enquêtes ou de douanes, dans le but de détecter la présence de matières illicites, en particulier des explosifs et des narcotiques.

Pour sécuriser par exemple du fret international transporté par avion, il est connu de prélever de l'air contenu dans un volume sensiblement confiné dans lequel se trouve un lot de fret à contrôler. Cet air prélevé est filtré, c'est-à-dire passé au travers d'un substrat ad hoc, de manière à capturer sur le substrat des molécules odorantes provenant de matières cibles susceptibles d'être présentes dans le volume confiné. Le substrat de collecte des molécules odorantes est ensuite analysé, notamment en le faisant renifler à un chien dressé à la recherche olfactive de l'odeur des matières cibles, comme expliqué en détail dans FR 2 956 211. Bien entendu, pour que l'analyse soit fiable, en particulier pour que le chien puisse efficacement détecter l'odeur des particules odorantes ciblées, il est indispensable qu'une quantité minimale de ces particules odorantes soit collectée lors du prélèvement d'air depuis le volume sensiblement confiné dans lequel le fret à contrôler se trouve. En pratique, l'air prélevé est aspiré par un appareil approprié qui fait circuler l'air aspiré à travers le substrat précité : pour que le prélèvement soit fiable, l'opération doit être opérée dans les règles de l'art, en particulier pendant une durée minimale. Par conséquent, la fiabilité du contrôle repose sur la vigilance de l'opérateur en charge de l'opération d'aspiration, avec un risque inhérent à ce type d'intervention humaine.

US 2008/087110, qui peut être considéré comme l'état de la technique le plus proche du système défini à la revendication 1 annexée, divulgue un système de détection d'odeurs, utilisable sur une scène de crime. Ce système comporte un substrat de collecte de molécules odorantes, ainsi qu'un appareil de prélèvement d'air. Cet appareil comporte un corps d'aspiration qui, par effet venturi, aspire de l'air au travers d'un dispositif de support dans lequel le substrat est retenu de manière amovible. Pour alimenter le corps d'aspiration en gaz comprimé et ainsi induire l'effet venturi, le corps d'aspiration est conçu pour, en service, être raccordé à une cartouche ou bouteille de gaz comprimé.

US 6 029 506 divulgue un système de prélèvement d'air, destiné à détecter la présence d'émissions gazeuses provenant d'équipements industriels, tels que des vannes. Ce système comporte un dispositif venturi qui, lorsqu'il est alimenté par de l'air comprimé via une ligne d'alimentation correspondante, provoque une aspiration dans une ligne d'aspiration. Pour détecter la présence d'émissions cibles dans l'air ainsi aspiré dans la ligne d'aspiration, cet air circule sur des capteurs, qui sont reliés à une unité électronique et qui sont agencés en aval d'un filtre à particules intégré à la ligne d'aspiration. La ligne d'alimentation est, quant à elle, équipée d'un régulateur de pression qui, de manière autonome, maintient une pression aval sensiblement constante, quelles que soient les variations de la pression amont.

GB 703 079 divulgue un appareil permettant de collecter des poussières de charbon ou de silice contenues dans l'atmosphère d'une mine. Moyennant le raccordement de cet appareil à une source d'air comprimé, l'appareil induit, par effet venturi, l'aspiration d'un prélèvement d'air qui circule au travers d'un filtre pour collecter les poussières. L'opérateur doit tenir compte du colmatage progressif de ce filtre par les poussières, ce colmatage progressif étant mis en évidence par des manomètres de l'appareil : pour ce faire, l'opérateur agit manuellement sur une vanne pour régler le débit d'air comprimé traversant l'appareil, cette vanne de réglage manuel devant progressivement être davantage ouverte au fur et à mesure du colmatage du filtre.

Le but de la présente invention est de proposer un système, qui, tout en étant particulièrement pratique et facile à utiliser, permette de réaliser des contrôles plus fiables.

A cet effet, l'invention a pour objet un système de détection de la présence d'une matière cible, tel que défini à la revendication 1.

Ainsi, l'appareil du système selon l'invention intègre une unité électronique qui permet d'automatiser au moins en partie le prélèvement d'air et donc de limiter certains manquements de fiabilité découlant de mauvaises manipulations par un opérateur humain. En effet, l'unité électronique commande une électrovanne qui agit sur la circulation d'air comprimé envoyé à une pompe venturi de l'appareil : lorsque l'électrovanne est ouverte, de l'air comprimé, fourni par une source externe à disposition, circule au travers de la pompe venturi et induit la création d'une dépression pour aspirer l'air à prélever ; lorsque l'électrovanne est fermée, la circulation d'air est interrompue et donc l'aspiration cesse. Dès lors, en programmant de manière appropriée l'unité électronique, l'opération d'aspiration, en particulier sa durée ou son intensité, peut être maîtrisée de manière fiable, à tout le moins de manière plus fiable que si cette opération était exécutée exclusivement par un opérateur humain. Des exemples de programmation sont détaillés par la suite. Par ailleurs, l'appareil du système conforme à l'invention reste très pratique à utiliser, puisqu'il est portatif et peut ne nécessiter qu'une alimentation en air comprimé pour fonctionner, l'alimentation électrique de l'unité électronique pouvant avantageusement être assurée par une batterie, rechargeable et/ou interchangeable, embarquée par l'appareil. De plus, la présence de l'unité électronique permet avantageusement d'intégrer des fonctions de contrôle et de sécurité à l'opération d'aspiration, comme détaillé par la suite. Par ailleurs, l'appareil du système conforme à l'invention peut avantageusement présenter divers aménagements pratiques, pour renforcer notamment sa performance, sa durée de vie et son ergonomie.

Ainsi, des caractéristiques additionnelles avantageuses du système conforme à l'invention sont spécifiées aux revendications dépendantes 2 à 12.

L'invention a également pour objet une installation de prélèvement d'air, telle que définie à la revendication 13.

L'invention a aussi pour objet une installation de prélèvement d'air, telle que définie à la revendication 14.

L'invention sera mieux comprise à la lecture de la description qui va suivre, donnée uniquement à titre d'exemple et faite en se référant aux dessins sur lesquels :
- la figure 1 est une vue schématique d'un exemple de réalisation d'un système conforme à l'invention, en cours d'utilisation pour réaliser un prélèvement d'air ;
- la figure 2 est vue en perspective d'un exemple d'une installation de prélèvement d'air conforme à l'invention, incluant le système de la figure 1 ; et
- la figure 3 est une section schématique partielle selon la ligne III-III de la figure 2.

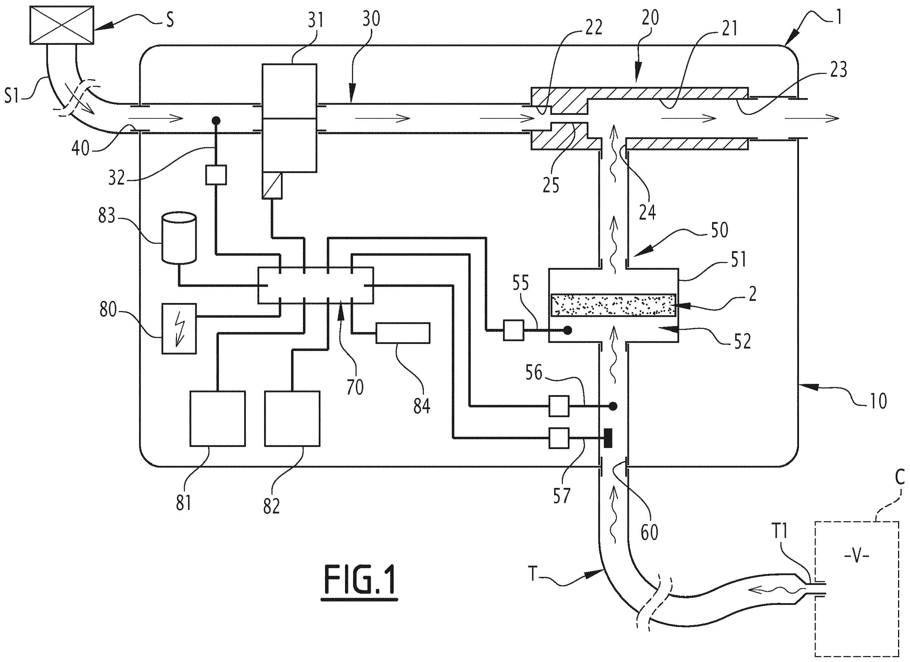

Sur les figures 1 à 3 est représenté un appareil 1 permettant de prélever de l'air contenu dans un volume sensiblement confiné V et de capturer sur un substrat 2 des molécules odorantes aériennes, susceptibles d'être présentes dans l'air prélevé.

En pratique, le volume d'air sensiblement confiné V est délimité par un contenant C à l'intérieur duquel se trouvent du fret et/ou des personnes, ayant par exemple à accéder ou à sortir d'une zone sécurisée, telle qu'une zone aéroportuaire ou portuaire. Une matière cible est susceptible de se trouver dans ce volume d'air V, en étant par exemple cachée dans le fret précité et/ou sur les personnes précitées : si cette matière cible est effectivement présente à l'intérieur du contenant C, elle y libère des molécules odorantes caractéristiques qui, en raison de leur légèreté, peuvent être en suspension à l'intérieur du contenant C, autrement dit dans le volume d'air V. A titre d'exemples non limitatifs, la matière cible peut être une matière explosive, telle que du plastic, de la dynamite, du TNT, etc., ou bien une matière narcotique, telle que de l'héroïne, de la cocaïne, du cannabis, etc. De même, la forme de réalisation du contenant C n'est pas limitative : ce contenant C peut être une remorque, tôlée et/ou bâchée, d'un camion, ou une palette de fret filmée, ou un container tôlé et/ou bâché, ou une caisse, ou un véhicule automobile, ou encore une pièce d'un bâtiment.

Par ailleurs, la forme de réalisation du substrat 2 de capture de molécules odorantes aériennes n'est pas non plus limitative, du moment que ce substrat 2 comporte un matériau sensible et réactif aux molécules odorantes aériennes ciblées, dans le sens où, au contact de telles molécules, le matériau précité les capture de manière réversible, par le biais d'une réaction physique, chimique ou physico-chimique. A titre d'exemple non limitatif, le matériau précité consiste en des fibres courtes de polyester ou de polypropylène.

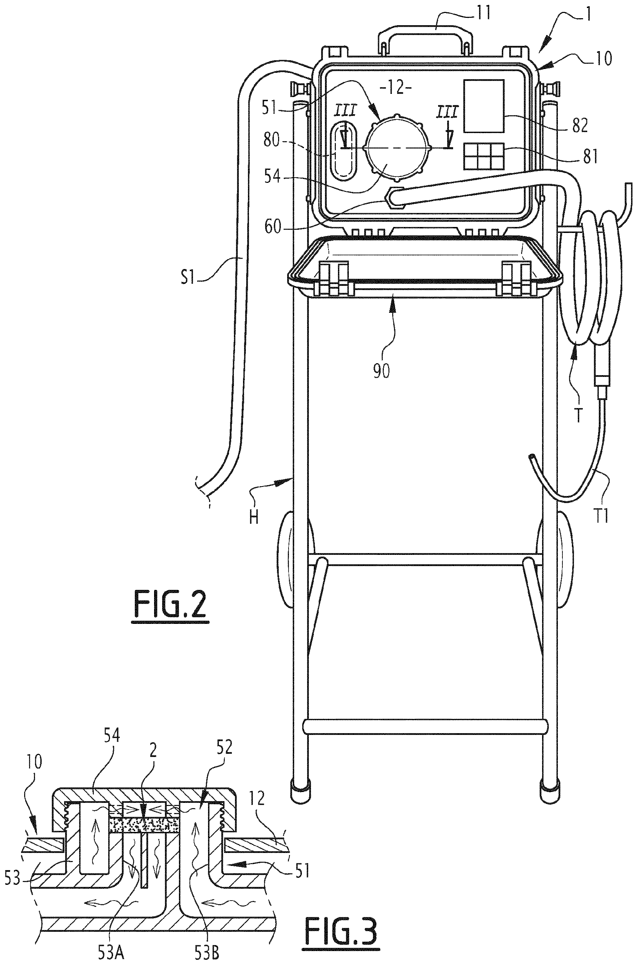

L'appareil 1 comporte une coque 10 supportant tous les autres composants de l'appareil. Sur la figure 1, la coque 10 est dessinée schématiquement en tant que contour extérieur de l'appareil 1. Sur la figure 2, la coque 10 se présente sous la forme d'un boîtier, par exemple globalement parallélépipédique. Quelle que soit la forme de réalisation de la coque 10, celle-ci est avantageusement munie d'une poignée 11 ou d'un organe de préhension similaire, qui permet à un utilisateur de tenir et transporter à la main l'appareil 1, en particulier quand cet appareil n'est pas encore en fonctionnement. Plus globalement, l'appareil 1 est prévu portatif, notamment grâce à sa coque 10.

L'appareil 1 comporte également une pompe venturi 20, appelée également pompe à vide venturi ou pompe à vide à effet venturi, agencée à l'intérieur de la coque 10. La pompe venturi 20 permet de générer un vide et, par-là, une aspiration, lorsqu'elle est traversée par un flux d'air comprimé. A cet effet, comme représenté schématiquement sur la figure 1, la pompe venturi 20 comprend un canal d'écoulement d'air 21, qui relie une bouche d'alimentation 22 et une bouche de refoulement 23 de la pompe venturi 20. De plus, la pompe venturi 20 comprend une prise d'aspiration 24 qui débouche dans le canal d'écoulement 21 entre les bouches d'alimentation 22 et du refoulement 23, immédiatement en aval d'un étranglement 25 du canal d'écoulement : lorsque de l'air comprimé circule dans le canal d'écoulement 21 depuis la bouche d'alimentation 22 vers la bouche de refoulement 23, comme indiqué par les flèches rectilignes sur la figure 1, l'air comprimé accélère en traversant l'étranglement 25 et, juste en aval de ce dernier, crée une dépression dans la prise d'aspiration 24, l'air présent dans la prise d'aspiration 24 étant alors aspiré dans le canal d'écoulement d'air 21 en direction de la bouche de refoulement 23, en étant mélangé avec le flux d'air comprimé. L'effet venturi qui vient d'être décrit est bien connu dans la technique, de sorte que la pompe venturi 20, en tant que telle, ne sera pas détaillée ici plus avant, étant entendu que les spécificités de réalisation de cette pompe venturi ne sont pas limitatives.

Afin d'alimenter la pompe venturi 20 en air comprimé, l'appareil 1 comporte une ligne d'alimentation 30, agencée à l'intérieur de la coque 10. Comme représenté schématiquement sur la figure 1, cette ligne d'alimentation 30 est, à son extrémité aval, connectée à la bouche d'alimentation 22 de la pompe venturi 20 et est, à son extrémité amont, connectée à un raccord 40 émergeant partiellement à l'extérieur de la coque 10. Le raccord 40 permet de connecter, à l'extérieur de la coque 10, la ligne d'alimentation 30 à une source d'air comprimé S, qui est distincte et externe à l'appareil 1 et qui est par exemple un réseau d'air comprimé, relié à l'appareil 1 par une conduite pressurisée S1 montrée sur les figures 1 et 2.

Comme indiqué schématiquement sur la figure 1, la ligne d'alimentation 30 intègre une électrovanne 31 qui commande la circulation d'air comprimé dans la ligne d'alimentation 30 : lorsque l'électrovanne 31 est ouverte, de l'air comprimé alimentant le raccord 40 circule dans la ligne d'alimentation 30 au travers de l'électrovanne 31 jusqu'à la bouche d'alimentation 22 de la pompe venturi 20, comme indiqué par les flèches rectilignes sur la figure 1 ; lorsque l'électrovanne 31 est fermée, la circulation d'air comprimé dans la ligne d'alimentation 30, entre l'amont et l'aval de l'électrovanne 31, est interrompue par l'électrovanne. L'ouverture et la fermeture de l'électrovanne 31 sont commandées électriquement. Suivant une disposition pratique avantageuse, l'électrovanne 31 est normalement fermée, c'est-à-dire qu'elle est fermée en l'absence d'alimentation électrique et qu'elle s'ouvre lorsqu'elle est alimentée.

Dans l'exemple de réalisation considéré ici, la ligne d'alimentation 30 est également pourvue d'une sonde de pression 32 permettant de mesurer la pression relative dans la ligne d'alimentation 30 en amont de l'électrovanne 31.

Afin d'aspirer un prélèvement d'air provenant du volume sensiblement confiné V, l'appareil 1 comporte une ligne d'aspiration 50 agencée à l'intérieur de la coque 10. Comme représenté schématiquement sur la figure 1, la ligne d'aspiration 50 est, à son extrémité aval, connectée à la prise d'aspiration 24 de la pompe venturi 21 et est, à son extrémité amont, connectée à un raccord 60 émergeant partiellement à l'extérieur de la coque 10. Dans l'exemple de réalisation considéré sur la figure 2, le raccord 60 est agencé au travers d'une face 12 de la coque 10. Le raccord 60 permet de connecter, à l'extérieur de la coque 10, la ligne d'aspiration 50 à un tuyau d'aspiration T qui, en pratique, est souple et présente une longueur significative, de par exemple plusieurs mètres. Comme représenté sur les figures 1 et 2, le tuyau d'aspiration T est muni, à son extrémité opposée à celle engagée avec le raccord 60, d'une canule T1, présentant un plus petit diamètre interne que le tuyau d'aspiration T et prévue pour être introduite à travers une paroi du contenant C, pour déboucher dans le volume sensiblement confiné V.

Comme représenté schématiquement sur la figure 1, la ligne d'aspiration 50 intègre un organe de circulation d'air 51 qui délimite intérieurement une chambre 52 conçue pour recevoir de manière amovible le substrat 2. Les aménagements de l'organe de circulation d'air 51 et de la chambre 52, qui permettent d'y loger puis d'en retirer le substrat 2, ne sont pas limitatifs du moment que, lorsque de l'air est aspiré dans la ligne d'aspiration 50 comme indiqué par les flèches ondulées sur la figure 1, cet air aspiré est forcé de circuler à travers le substrat 2 reçu dans la chambre 52.

Suivant un mode de réalisation préférentiel, qui est mis en oeuvre dans l'exemple des figures 2 et 3, l'organe de circulation d'air 51 comporte un corps 53 et un couvercle amovible 54, qui délimitent conjointement la chambre 52. Plus précisément, comme représenté schématiquement sur la figure 3, le corps 53 comprend un canal central 53A et un canal périphérique 53B entourant au moins partiellement le canal central 53A, ces canaux 53A et 53B étant par exemple délimités par deux parois tubulaires coaxiales de l'organe de circulation d'air 51. Les canaux 53A et 53B débouchent, chacun et de manière distincte, dans la chambre 52 qui, à l'opposé du débouché des canaux 53A et 53B, est fermée par le couvercle 54 lorsque ce dernier est fixé sur le corps 53. Afin d'accéder à la chambre 52 et d'y placer puis en retirer le substrat 2, le couvercle 54 est rapporté de manière amovible sur le corps 53, en étant par exemple vissé sur la paroi tubulaire externe du corps 53, étant remarqué que, dans l'exemple de réalisation considéré ici, cette paroi tubulaire externe est agencée au travers de la face 12 de la coque 10. Dans tous les cas, lorsque le couvercle 54 est fixé sur le corps 53 et que le substrat 2 est reçu dans la chambre 52, le substrat 2 se retrouve maintenu en place entre le corps 53 et le couvercle 54 de manière que, comme indiqué par les flèches ondulées sur la figure 3, l'air aspiré dans la ligne d'aspiration 50 circule successivement dans le canal périphérique 53B, à travers le substrat 2 reçu dans la chambre 52, et dans le canal central 53A, avant de rejoindre la prise d'aspiration 24 de la pompe venturi 20. En variante non représentée, la circulation de l'air aspiré dans la ligne d'aspiration 50 pourrait être inverse au niveau de l'organe de circulation d'air 51, c'est-à-dire que cet air aspiré peut circuler successivement dans le canal central 53A, à travers le substrat 2 reçu dans la chambre 52, et dans le canal périphérique 53B, avant de rejoindre la prise d'aspiration 24. Dans les deux cas, l'air aspiré est efficacement canalisé immédiatement en amont et immédiatement en aval du substrat 2, de manière que cet air soit réparti sur l'essentiel voire la totalité de l'étendue du substrat 2, tout en limitant les risques qu'une partie de l'air aspiré puisse passer entre les canaux 53A et 53B en contournant le substrat 2.

Quelle que soit la forme de réalisation de l'organe de circulation d'air 51, ce dernier est, dans l'exemple considéré sur la figure 1, pourvu d'une sonde de pression 55 permettant de mesurer la pression relative dans la chambre 52.

Egalement dans l'exemple de réalisation considéré sur la figure 1, la ligne d'aspiration 50 est pourvue, en plus de la sonde de pression 55 interne à l'organe de circulation d'air 51, d'une sonde de pression 56 qui permet de mesurer la pression relative dans la ligne d'aspiration 50 en amont de l'organe de circulation d'air 51.

Egalement dans l'exemple de réalisation de la figure 1, la ligne d'aspiration 50 est par ailleurs pourvue d'un débitmètre 57 permettant de mesurer le débit dans la ligne d'aspiration 50. Le débitmètre 57 est par exemple un débitmètre thermique.

Comme représenté schématiquement sur la figure 1, l'appareil 1 comporte également une unité électronique 70, qui est agencée à l'intérieur de la coque 10 et qui, en pratique, intègre un ou plusieurs microprocesseurs, ainsi que des composants électroniques associés. Cette unité électronique 70 est reliée, notamment de manière filaire, à l'électrovanne 31, aux sondes de pression 32, 55 et 56, et au débitmètre 57 : les liaisons correspondantes permettent de transmettre des signaux électriques entre l'unité électronique 70 et les composants correspondants, tout en permettant l'alimentation électrique de ces derniers, étant remarqué que l'unité électronique 70 est elle-même alimentée électriquement par tout moyen approprié. Dans l'exemple de réalisation considéré ici, l'appareil 1 comporte à cet effet une batterie 80 permettant d'alimenter électriquement l'unité électronique 70 : cette batterie 80 est rechargeable et/ou interchangeable, l'accès à la batterie aux fins de sa recharge et/ou de son remplacement étant avantageusement prévu au travers de la face 12 de la coque 10, comme indiqué en pointillés sur la figure 2.

Par ailleurs, dans l'exemple de réalisation envisagé ici et pour des raisons qui apparaîtront plus loin, l'unité électronique 70 est reliée à d'autres composants électriques ou électroniques, à savoir une interface de commande manuelle 81 et une interface d'affichage 82 qui, comme montré sur la figure 2, sont avantageusement agencées au travers de la face 12 de la coque 10.

Dans tous les cas, l'unité électronique 70 permet de commander l'ouverture et la fermeture de l'électrovanne 31, moyennant des signaux électriques correspondants fournis à l'électrovanne par l'unité électronique. En pratique, plusieurs possibilités de configuration ou de programmation de l'unité électronique 70 sont envisageables pour faire fonctionner l'appareil 1.

Suivant une première possibilité, l'unité électronique 70 est configurée pour ouvrir l'électrovanne 31 lorsque l'unité électronique reçoit une instruction de démarrage de la part d'un utilisateur, typiquement donnée au travers de l'interface de commande manuelle 81. Une fois que l'unité électronique 70 a commandé l'ouverture de l'électrovanne 31, l'unité électronique décompte une durée prédéterminée, au bout de laquelle l'unité électronique commande la fermeture de l'électrovanne 31. En pratique, la durée prédéterminée précitée est préprogrammée, en étant par exemple stockée dans une mémoire 83 de l'appareil 1. Le cas échéant, la durée prédéterminée précitée est choisie par l'utilisateur, en étant par exemple sélectionnée dans une liste de plusieurs valeurs possibles, stockées dans la mémoire 83 et proposées à l'utilisateur via l'interface d'affichage 82, l'une d'elles étant validée par l'utilisateur grâce à l'interface de commande manuelle 81. En variante, la durée prédéterminée précitée peut être saisie par l'utilisateur, grâce aux interfaces 81 et 82. En pratique, on comprend que la valeur de la durée prédéterminée précitée est liée, entre autres, à la grandeur du volume sensiblement confiné V.

Selon une autre possibilité de programmation ou configuration, l'unité électronique 70 est configurée pour, après avoir ouvert l'électrovanne 31 à réception d'une instruction de démarrage de la part d'un utilisateur, non pas fermer l'électrovanne au bout d'une durée prédéterminée, mais fermer l'électrovanne une fois qu'une quantité d'air, calculée par l'unité électronique 70, atteint une valeur prédéterminée qui est préprogrammée, en étant par exemple stockée dans la mémoire 83. La quantité d'air calculée par l'unité électronique 70 est déterminée à partir du débit d'air aspiré dans la ligne d'aspiration 50, mesuré par le débitmètre 57.

D'autres possibilités de programmation ou configuration de l'unité électronique 70 peuvent être envisagées, afin que cette unité électronique commande l'ouverture puis la fermeture de l'électrovanne 31 de manière à réaliser un prélèvement d'air dans des conditions prédéterminées.

Suivant un aspect optionnel avantageux, l'unité électronique 70 permet de contrôler le prélèvement d'air réalisé par l'appareil 1 afin de sécuriser le résultat obtenu. Pour ce faire, lorsque l'appareil 1 est en service, en particulier lorsque l'électrovanne 31 est ouverte, l'unité électronique 70 est configurée pour comparer à des seuils prédéterminés respectifs la valeur absolue des pressions relatives respectivement mesurées par les sondes de pression 32, 55 et 56. Ainsi, l'unité électronique 70 détecte un dysfonctionnement :
- lorsque la valeur absolue de la pression relative mesurée par la sonde de pression 32 est inférieure à un premier seuil prédéterminé, ce qui correspond à une alimentation insuffisante de la ligne d'alimentation 30 en air comprimé depuis la source d'air comprimé S, ou bien
- lorsque la valeur absolue de la pression relative mesurée par la sonde de pression 55 est inférieure à un deuxième seuil prédéterminé, ce qui correspond à une mauvaise fermeture de la chambre 52, notamment à une mauvaise fixation du couvercle amovible 54 sur le corps 53, ou bien
- lorsque la valeur absolue de la pression relative mesurée par la sonde de pression 56 est supérieure à un troisième seuil prédéterminé, ce qui correspond à un excès de dépression en entrée de la ligne d'aspiration 50, typiquement dû à l'obturation partielle ou totale du tuyau d'aspiration T.

Dès lors que l'unité électronique 70 détecte un tel dysfonctionnement, une alerte peut par exemple être affichée sur l'interface d'affichage 82 à l'attention de l'utilisateur. De plus, l'unité électronique 70 peut être avantageusement configurée pour fermer l'électrovanne 31 à l'apparition d'un tel dysfonctionnement, interrompant alors le prélèvement d'air en cours.

Suivant un autre aspect optionnel avantageux, qui est illustré à la figure 2, l'appareil 1 comporte un capot 90 qui est monté de manière mobile, notamment basculante, sur la coque 10 entre des positions fermée et ouverte, le capot 90 étant montré en position ouverte sur la figure 2. Dans la position fermée, le capot 90 recouvre et ainsi protège la face 12 de la coque 10, en interdisant l'accès aux composants de l'appareil 1 agencés au travers de cette face 12. En particulier, le capot 90 en position fermée interdit l'accès au raccord 60, à la chambre 52 interne à l'organe de circulation d'air 51 et à l'interface de commande manuelle 81 : tant que le capot 90 est en position fermée, l'appareil 1 ne peut pas être mis en service. Lorsque le capot 90 est en position ouverte, le capot est écarté de la face 12 de la coque 10 de manière à ce que l'utilisateur puisse accéder, entre autres, au raccord 60, à la chambre 52 et à l'interface de commande manuelle 81.

Avantageusement, le capot 90 en position ouverte peut servir de plan de travail pour l'utilisateur, notamment pour y déposer le couvercle 54 lorsque ce dernier est désolidarisé du corps 53, ainsi que pour y déposer un étui de transport du substrat 2 dans lequel ce dernier est à placer après avoir été retiré de la chambre 52. Afin que l'appareil 1 soit situé à hauteur des mains de l'utilisateur se tenant debout, et ainsi améliorer l'ergonomie de l'appareil 1, ce dernier est avantageusement associé à un chariot H, auquel la coque 10 peut être fixée aux fins de son support et qui maintient sensiblement à l'horizontale le capot 90 en position ouverte. Ce chariot H repose sur le sol par des pieds et/ou des roulettes, facilitant son déplacement, notamment afin de rapprocher du contenant C l'appareil 1 supporté par le chariot H.

Enfin, divers aménagements et variantes à l'appareil 1 décrit jusqu'ici, ainsi qu'à l'installation à laquelle appartient l'appareil 1, sont envisageables. A titre d'exemple, afin d'échanger à distance des données et/ou des instructions de commande entre l'appareil 1 et un terminal distant, l'appareil 1 peut intégrer un module de communication sans fil 84, relié à l'unité électronique 70, comme indiqué schématiquement sur la figure 1.

## Revendications

1. Système de détection de la présence d'une matière cible, comportant :
- un substrat (2) à même de capturer de manière réversible des molécules odorantes associées à la matière cible, et
- un appareil portatif de prélèvement d'air (1), comportant :
- une pompe venturi (20), qui comprend à la fois un canal d'écoulement d'air (21), reliant une bouche d'alimentation (22) et une bouche de refoulement (23) de la pompe venturi (20), et une prise d'aspiration (24) débouchant dans le canal d'écoulement entre les bouches d'alimentation et de refoulement, la pompe venturi étant adaptée pour créer une dépression dans la prise d'aspiration lorsque de l'air comprimé circule dans le canal d'écoulement depuis la bouche d'alimentation vers la bouche de refoulement,
- une ligne d'alimentation (30) prévue pour alimenter la pompe venturi (20) en air comprimé, la ligne d'alimentation étant connectée à la bouche d'alimentation (22) et étant pourvue d'une électrovanne (31), dont l'ouverture et la fermeture sont commandées électriquement et qui commande la circulation d'air comprimé dans la ligne d'alimentation,
- une ligne d'aspiration (50) prévue pour aspirer un prélèvement d'air, la ligne d'aspiration étant connectée à la prise d'aspiration (24) et étant pourvue d'un organe de circulation d'air (51), lequel organe de circulation d'air délimite une chambre (52) de réception amovible du substrat (2) et lequel organe de circulation d'air est adapté pour faire circuler le prélèvement d'air aspiré à travers le substrat reçu dans la chambre, et
- une unité électronique (70), reliée à l'électrovanne (31) et adaptée pour commander l'ouverture et la fermeture de l'électrovanne de manière que :
- lorsque l'électrovanne est ouverte, de l'air comprimé circule dans la ligne d'alimentation (30) au travers de l'électrovanne, et
- lorsque l'électrovanne est fermée, la circulation d'air comprimé dans la ligne d'alimentation, entre l'amont et l'aval de l'électrovanne, est interrompue par l'électrovanne.

2. Système suivant la revendication 1, dans lequel la ligne d'alimentation (30) est également pourvue d'une première sonde de pression (32), qui est adaptée pour mesurer la pression relative dans la ligne d'alimentation en amont de l'électrovanne (31) et pour envoyer un signal de mesure correspondant à l'unité électronique (70), l'unité électronique étant configurée pour comparer à un premier seuil la valeur absolue de la pression relative mesurée par cette première sonde de pression.

3. Système suivant l'une des revendications 1 ou 2, dans lequel l'organe de circulation d'air (51) est pourvu d'une deuxième sonde de pression (55), qui est adaptée pour mesurer la pression relative dans la chambre (52) et pour envoyer un signal de mesure correspondant à l'unité électronique (70), l'unité électronique étant configurée pour comparer à un second seuil la valeur absolue de la pression relative mesurée par cette seconde sonde de pression.

4. Système suivant l'une quelconque des revendications précédentes, dans lequel la ligne d'aspiration (50) est également pourvue d'une troisième sonde de pression (56), qui est adaptée pour mesurer la pression relative dans la ligne d'aspiration en amont de l'organe de circulation d'air (51) et pour envoyer un signal de mesure correspondant à l'unité électronique (70), l'unité électronique étant configurée pour comparer à un troisième seuil la valeur absolue de la pression relative mesurée par cette troisième sonde de pression.

5. Système suivant l'une quelconque des revendications 2 à 4, dans lequel l'unité électronique (70) est configurée pour fermer l'électrovanne (31) lorsque la valeur absolue de la pression mesurée par la première sonde de pression (32) est inférieure au premier seuil, ou lorsque la valeur absolue de la pression relative mesurée par la deuxième sonde de pression (56) est inférieure au deuxième seuil, ou bien lorsque la valeur absolue de la pression relative mesurée par la troisième sonde de pression (56) est supérieure au troisième seuil.

6. Système suivant l'une quelconque des revendications précédentes, dans lequel l'unité électronique (70) est configurée pour :
- ouvrir l'électrovanne (31) lorsque l'unité électronique reçoit une instruction de démarrage de la part d'un utilisateur, puis
- fermer l'électrovanne au bout d'une durée prédéterminée qui est décomptée par l'unité électronique.

7. Système suivant l'une quelconque des revendications 1 à 5, dans lequel la ligne d'aspiration (50) est également pourvue d'un débitmètre (57), qui est adapté pour mesurer le débit dans la ligne d'aspiration et envoyer un signal de mesure correspondant à l'unité électronique (70), et en ce que l'unité électronique (70) est configurée pour :
- ouvrir l'électrovanne (31) lorsque l'unité électronique reçoit une instruction de démarrage de la part d'un utilisateur, puis
- fermer l'électrovanne une fois qu'une quantité d'air, calculée par l'unité électronique à partir du débit mesuré par le débitmètre (57), atteint une valeur prédéterminée.

8. Système suivant l'une quelconque des revendications précédentes, dans lequel l'organe de circulation d'air (51) comporte :
- un corps (53) qui comprend un canal central (53A) et un canal périphérique (53B), entourant au moins partiellement le canal central, qui débouchent chacun dans la chambre (52), et
- un couvercle amovible (54) qui est adapté pour être rapporté sur le corps (53) de manière à fermer la chambre (52) et à maintenir en place entre le corps et le couvercle le substrat (2) reçu dans la chambre, de sorte que l'air aspiré dans la ligne d'aspiration (50) circule successivement dans l'un du canal central (53A) et du canal périphérique (53B), à travers le substrat (2) reçu dans la chambre (52), et dans l'autre du canal central et du canal périphérique, avant de rejoindre la prise d'aspiration (24).

9. Système suivant l'une quelconque des revendications précédentes, dans lequel l'électrovanne (31) est fermée en l'absence d'alimentation électrique tandis que l'électrovanne s'ouvre lorsqu'elle est alimentée.

10. Système suivant l'une quelconque des revendications précédentes, dans lequel l'appareil (1) comporte en outre une batterie (80), rechargeable et/ou interchangeable, prévue pour alimenter électriquement l'unité électronique (70).

11. Système suivant l'une quelconque des revendications précédentes, dans lequel l'appareil (1) comporte en outre une coque (10) dans laquelle sont agencées la pompe venturi (20), la ligne d'alimentation (30), la ligne d'aspiration (50) et l'unité électronique (70), laquelle coque porte un premier raccord (40), prévu pour connecter la ligne d'alimentation à une source d'air comprimé (S), ainsi qu'un second raccord (60), prévu pour connecter la ligne d'aspiration à un tuyau d'aspiration (T).

12. Système suivant la revendication 11, dans lequel l'appareil (1) comporte en outre un capot (90) qui est monté de manière mobile sur la coque (10) entre une position fermée, dans laquelle le capot recouvre une face (12) de la coque en interdisant l'accès au second raccord (60), à la chambre (52) et à une interface de commande manuelle (81), reliée à l'unité électronique (70), et une position ouverte, dans laquelle le capot est écarté de ladite face de la coque de manière à laisser l'accès au second raccord, à la chambre et à l'interface de commande manuelle.

13. Installation de prélèvement d'air, comportant :
- un système (1) conforme à l'une quelconque des revendications précédentes,
- une source d'air comprimé (S) reliée à l'extrémité amont de la ligne d'alimentation (30) de l'appareil (1), et
- un tuyau d'aspiration (T), dont l'une des extrémités est reliée à l'extrémité amont de la ligne d'aspiration (50) de l'appareil (1) et dont l'autre extrémité est adaptée pour être introduite dans un volume d'air sensiblement confiné (V) dans lequel au moins une matière cible est susceptible de se trouver.

14. Installation de prélèvement d'air, comportant :
- une source d'air comprimé (S),
- un système (1) qui est conforme à la revendication 12 et dont le premier raccord (40) est relié à la source d'air comprimé (S),
- un tuyau d'aspiration (T), dont l'une des deux extrémités est engagée avec le second raccord (60) de l'appareil (1) et dont l'autre extrémité est adaptée pour être introduite dans un volume d'air sensiblement confiné (V) dans lequel au moins une matière cible est susceptible de se trouver, et
- un chariot (H) adapté pour supporter fixement la coque (10) de l'appareil (1) et pour maintenir sensiblement à l'horizontale le couvercle (90) en position ouverte.

## Patentansprüche

1. System zur Detektion des Vorhandenseins eines Zielmaterials, umfassend:
- ein Substrat (2), das in der Lage ist, Geruchsmoleküle reversibel einzufangen, die mit dem Zielmaterial assoziiert sind, und
- ein tragbares Luftprobenentnahmegerät (1), umfassend:
- eine Venturipumpe (20), die sowohl einen Luftströmungskanal (21), der eine Einlassöffnung (22) und eine Auslassöffnung (23) der Venturipumpe (20) verbindet, als auch einen Sauganschluss (24), der in den Strömungskanal zwischen der Einlassöffnung und der Auslassöffnung mündet, umfasst, wobei die Venturipumpe angepasst ist, um in dem Sauganschluss einen Unterdruck zu erzeugen, wenn Druckluft durch den Strömungskanal von der Einlassöffnung zu der Auslassöffnung zirkuliert,
- eine Versorgungsleitung (30), die bereitgestellt ist, um die Venturipumpe (20) mit Druckluft zu versorgen, wobei die Versorgungsleitung mit der Einlassöffnung (22) verbunden ist und mit einem Magnetventil (31) versehen ist, dessen Öffnen und Schließen elektrisch gesteuert werden und das die Zirkulation von Druckluft in der Versorgungsleitung steuert,
- eine Saugleitung (50), die bereitgestellt ist, um eine Luftentnahmeprobe anzusaugen, wobei die Saugleitung mit dem Sauganschluss (24) verbunden und mit einem Luftzirkulationselement (51) versehen ist, wobei das Luftzirkulationselement eine abnehmbare Aufnahmekammer (52) des Substrats (2) begrenzt und wobei das Luftzirkulationselement angepasst ist, um die angesaugte Luftprobe durch das in der Kammer aufgenommene Substrat zirkulieren zu lassen, und
- eine elektronische Einheit (70), die mit dem Magnetventil (31) verbunden und angepasst ist, das Öffnen und Schließen des Magnetventils wie folgt zu steuern:
- wenn das Magnetventil offen ist, zirkuliert Druckluft durch das Magnetventil in die Versorgungsleitung (30), und
- wenn das Magnetventil geschlossen ist, wird die Zirkulation von Druckluft in der Versorgungsleitung zwischen stromaufwärts und stromabwärts des Magnetventils durch das Magnetventil unterbrochen.

2. System nach Anspruch 1, wobei die Versorgungsleitung (30) auch mit einer ersten Drucksonde (32) versehen ist, die angepasst ist, um den relativen Druck in der Versorgungsleitung stromaufwärts von dem Magnetventil (31) zu messen und ein entsprechendes Messsignal an die elektronische Einheit (70) zu senden, wobei die elektronische Einheit konfiguriert ist, um den Absolutwert des von dieser ersten Drucksonde gemessenen relativen Drucks mit einem ersten Schwellenwert zu vergleichen.

3. System nach einem der Ansprüche 1 oder 2, wobei das Luftzirkulationselement (51) mit einer zweiten Drucksonde (55) versehen ist, die angepasst ist, um den relativen Druck in der Kammer (52) zu messen und ein entsprechendes Messsignal an die an die elektronische Einheit (70) zu senden, wobei die elektronische Einheit konfiguriert ist, um den Absolutwert des von dieser zweiten Drucksonde gemessenen relativen Drucks mit einem zweiten Schwellenwert zu vergleichen.

4. System nach einem der vorherigen Ansprüche, wobei die Saugleitung (50) auch mit einer dritten Drucksonde (56) versehen ist, die angepasst ist, um den relativen Druck in der Saugleitung stromaufwärts von dem Luftzirkulationselement (51) zu messen und ein entsprechendes Messsignal an die elektronische Einheit an die elektronische Einheit (70) zu senden, wobei die elektronische Einheit konfiguriert ist, um den Absolutwert des von dieser dritten Drucksonde gemessenen relativen Drucks mit einem dritten Schwellenwert zu vergleichen.

5. System nach einem der Ansprüche 2 bis 4, wobei die elektronische Einheit (70) konfiguriert ist, um das Magnetventil (31) zu schließen, wenn der Absolutwert des von der ersten Drucksonde (32) gemessenen Drucks unter dem ersten Schwellenwert ist, oder wenn der Absolutwert des von der zweiten Drucksonde (56) gemessenen relativen Drucks kleiner ist als der zweite Schwellenwert ist, oder wenn der Absolutwert des von der dritten Drucksonde (56) gemessenen relativen Drucks größer ist als der dritte Schwellenwert.

6. System einem der vorherigen Ansprüche, wobei die elektronische Einheit (70) zu Folgendem konfiguriert ist:
- Öffnen des Magnetventils (31), wenn die elektronische Einheit eine Startanweisung seitens eines Benutzers erhält, dann
- Schließen des Magnetventils nach einer vorbestimmten Zeit, die von der elektronischen Einheit heruntergezählt wird.

7. System nach einem der Ansprüche 1 bis 5, wobei die Saugleitung (50) auch mit einem Durchflussmesser (57) versehen ist, der angepasst ist, um den Durchfluss in der Saugleitung zu messen und ein entsprechendes Messsignal an die elektronische Einheit (70) zu senden, und dass die elektronische Einheit (70) zu Folgendem konfiguriert ist:
- Öffnen des Magnetventils (31), wenn die elektronische Einheit eine Startanweisung seitens eines Benutzers erhält, dann
- Schließen des Magnetventils, sobald eine Luftmenge, die von der elektronischen Einheit aus der vom Durchflussmesser (57) gemessenen Durchflussmenge berechnet wird, einen vorbestimmten Wert erreicht.

8. System einem der vorherigen Ansprüche, wobei das Luftzirkulationsorgan (51) Folgendes umfasst:
- einen Körper (53), der einen mittleren Kanal (53A) und einen peripheren Kanal (53B) umfasst, der den mittleren Kanal zumindest teilweise umgibt, die jeweils in die Kammer (52) münden, und
- einen abnehmbaren Deckel (54), der angepasst ist, um auf den Körper (53) aufgesetzt zu werden, um die Kammer (52) zu schließen und das in der Kammer aufgenommene Substrat (2) zwischen dem Körper und dem Deckel an Ort und Stelle zu halten, sodass die angesaugte Luft in der Ansaugleitung (50) nacheinander durch das in der Kammer (52) aufgenommene Substrat (2) in den mittleren Kanal (53A) oder den peripheren Kanal (53B) und in den anderen von dem mittleren Kanal und dem peripheren Kanal strömt, bevor sie den Sauganschluss (24) erreicht.

9. System nach einem der vorherigen Ansprüche, wobei das Magnetventil (31) geschlossen ist, wenn keine Stromversorgung vorhanden ist, während das Magnetventil öffnet, wenn es mit Strom versorgt wird.

10. System nach einem der vorherigen Ansprüche, wobei das Gerät (1) ferner eine wiederaufladbare und/oder austauschbare Batterie (80) umfasst, die zur elektrischen Versorgung der elektronischen Einheit (70) bereitgestellt ist.

11. System nach einem der vorherigen Ansprüche, wobei die Vorrichtung (1) ferner ein Gehäuse (10) umfasst, in dem die Venturipumpe (20), die Versorgungsleitung (30), die Saugleitung (50) und die elektronische Einheit (70) angeordnet sind, wobei die Schale einen ersten Anschluss (40), der zum Verbinden der Versorgungsleitung mit einer Druckluftquelle (S) bereitgestellt ist, sowie einen zweiten Anschluss (60), der zum Verbinden der Saugleitung mit einem Saugrohr (T) bereitgestellt ist, umfasst.

12. System nach Anspruch 11, wobei das Gerät (1) ferner eine Haube (90) umfasst, die zwischen einer geschlossenen Position, in der die Haube eine Seite (12) der Schale abdeckt und dabei den Zugang zu dem zweiten Anschluss (60), zu der Kammer (52) und zu einer Handsteuerungsschnittstelle (81), die mit der elektronischen Einheit (70) verbunden ist, und einer offenen Position, in der die Haube von der Seite der Schale beabstandet ist, um den Zugang zu dem zweiten Anschluss, der Kammer und der Handsteuerungsschnittstelle zu ermöglichen, beweglich an der Schale (10) montiert ist.

13. Luftentnahmeanlage, umfassend:
- System (1) nach einem der vorherigen Ansprüche,
- eine Druckluftquelle (S), die mit dem stromaufwärtigen Ende der Versorgungsleitung (30) des Geräts (1) verbunden ist, und
- ein Saugrohr (T), dessen eine Ende mit dem stromaufwärtigen Ende der Saugleitung (50) des Geräts (1) verbunden ist und dessen andere Ende angepasst ist, um in ein im Wesentlichen eingeschlossenes Luftvolumen (V) eingeführt zu werden, in dem sich mindestens ein Zielmaterial befinden kann.

14. Luftentnahmeanlage, umfassend:
- eine Druckluftquelle (S),
- ein System (1), das dem Anspruch 12 entspricht und dessen erster Anschluss (40) mit der Druckluftquelle (S) verbunden ist,
- einen Saugschlauch (T), dessen eine der zwei Enden mit dem zweiten Anschluss (60) des Geräts (1) in Eingriff ist und dessen andere Ende angepasst ist, um in ein im Wesentlichen eingeschlossenes Luftvolumen (V) eingeführt zu werden, in dem sich mindestens ein Zielmaterial befinden kann, und
- einen Wagen (H), der angepasst ist, um die Schale (10) des Geräts (1) fest zu tragen und den Deckel (90) in der geöffneten Position im Wesentlichen horizontal zu halten.

## Claims

1. A system for detecting the presence of a target material, comprising:
- a substrate (2) capable of reversibly capturing fragrant molecules associated with the target material, and
- a portable air sampling apparatus (1), including:
- a Venturi pump (20), which comprises both an air flow channel (21), connecting a supply mouth (22) and a discharge mouth (23) of the Venturi pump (20), and a suction inlet (24) emerging in the flow channel between the supply and discharge mouths, the Venturi pump being suitable for creating a vacuum in the suction inlet when the compressed air flows in the flow channel from the supply mouth to the discharge mouth,
- a supply line (30) provided to supply the Venturi pump (20) with compressed air, the supply line being connected to the supply mouth (22) and being provided with a solenoid valve (31), the opening and closing of which is electrically controlled and which controls the flow of compressed air in the supply line,
- a suction line (50) provided to suction an air sample, the suction line being connected to the suction inlet (24) and being provided with an air circulation member (51), this air circulation member delimiting a receiving chamber (52) for removably receiving the substrate (2) and this air circulation member being suitable for circulating the suctioned air sample through the substrate received in the chamber, and
- an electronic unit (70), connected to the solenoid valve (31) and suitable for controlling the opening and closing of the solenoid valve such that:
- when the solenoid valve is open, compressed air flows in the supply line (30) through the solenoid valve, and
- when the solenoid valve is closed, the flow of compressed air in the supply line, between the upstream and downstream directions of the solenoid valve, is interrupted by the solenoid valve.

2. The system according to claim 1, wherein the supply line (30) is also provided with a first pressure probe (32), which is suitable for measuring the relative pressure in the supply line upstream from the solenoid valve (31) and for sending a measuring signal corresponding to the electronic unit (70), the electronic unit being configured to compare the absolute value of the relative pressure measured by this first pressure probe to a first threshold.

3. The system according to one of claims 1 or 2, wherein the air circulation member (51) is provided with a second pressure probe (55), which is suitable for measuring the relative pressure in the chamber (52) and for sending a corresponding measuring signal to the electronic unit (70), the electronic unit being configured to compare the absolute value of the relative pressure measured by this second pressure probe to a second threshold.

4. The system according to any one of the preceding claims, wherein the suction line (50) is also provided with a third pressure probe (56), which is suitable for measuring the relative pressure in the suction line upstream from the air circulation member (51) and for sending a corresponding measuring signal to the electronic unit (70), the electronic unit being configured to compare the absolute value of the relative pressure measured by this third pressure probe to a third threshold.

5. The system according to any one of claims 2 to 4, wherein the electronic unit (70) is configured to close the solenoid valve (31) when the absolute value of the pressure measured by the first pressure probe (32) is below the first threshold, or when the absolute value of the relative pressure measured by the second pressure probe (56) is below the second threshold, or when the absolute value of the relative pressure measured by the third pressure probe (56) is above the third threshold.

6. The system according to any one of the preceding claims, wherein the electronic unit (70) is configured to:
- open the solenoid valve (31) when the electronic unit receives a startup instruction from a user, then
- close the solenoid valve after a predetermined duration that is counted down by the electronic unit.

7. The system according to any one of claims 1 to 5, wherein the suction line (50) is also provided with a flow meter (57), which is suitable for measuring the flow meter in the suction line and sending a corresponding measuring signal to the electronic unit (70), and in that the electronic unit (70) is configured to:
- open the solenoid valve (31) when the electronic unit receives a startup instruction from a user, then
- close the solenoid valve once a quantity of air, calculated by the electronic unit from the flow rate measured by the flow meter (57), reaches a predetermined value.

8. The system according to any one of the preceding claims, wherein the air circulation member (51) includes:
- a body (53) that comprises a central channel (53A) and a peripheral channel (53B), at least partially surrounding the central channel, that each emerge in the chamber (52), and
- a removable cover (54) that is suitable for being attached on the body (53) so as to close the chamber (52) and to keep in place, between the body and the cover, the substrate (2) received in the chamber, such that the air suctioned in the suction line (50) circulates successively in one of the central channel (53A) and the peripheral channel (53B), through the substrate (2) received in the chamber (52), and in the other central channel and the peripheral channel, before rejoining the suction inlet (24).

9. The system according to any one of the preceding claims, wherein the solenoid valve (31) is closed in the absence of electrical power while the solenoid valve opens when it is supplied with power.

10. The system according to any one of the preceding claims, wherein the apparatus (1) further includes a battery (80), rechargeable and/or interchangeable, provided to supply electricity to the electronic unit (70).

11. The system according to any one of the preceding claims, wherein the apparatus (1) further includes a shell (10) in which are arranged the Venturi pump (20), the supply line (30), the suction line (50) and the electronic unit (70), the shell bearing a first coupling (40), provided to connect the supply line to a compressed air source (S), as well as a second coupling (60), provided to connect the suction line to a suction hose (T).

12. The system according to claim 11, wherein the apparatus (1) further includes a hood (90) that is mounted movably on the shell (10) between a closed position, in which the hood covers a face (12) of the shell while prohibiting access to the second coupling (60), the chamber (52) and the manual control interface (81), connected to the electronic unit (70), and an open position, in which the hood is separated from said face of the shell so as to allow access to the second coupling, the chamber and the manual control interface.

13. An air sampling installation, including:
- a system according to any one of the preceding claims,
- a compressed air source (S) connected to the upstream end of the supply line (30) of the apparatus (1), and
- a suction hose (T), one of the ends of which is connected to the upstream end of the suction line (50) of the apparatus (1) and the other end of which is suitable for being inserted into a substantially confined volume of air (V) in which at least one target material can be located.

14. An air sampling installation, including:
- a compressed air source (S),
- a system that is according to claim 12 and whereof the first coupling (40) is connected to the compressed air source (S),
- a suction hose (T), one of the two ends of which is engaged with the second coupling (60) of the apparatus (1) and the other end of which is suitable for being inserted into a substantially confined volume of air (V) in which at least one target material can be located, and
- a trolley (H) suitable for fixedly supporting the shell (10) of the apparatus (1) and for keeping the cover (90) substantially horizontal in the open position.
